# EUROPÄISCHE PATENTSCHRIFT

(11) **EP 4 601 821 B1**
(45) Veröffentlichungstag und Bekanntmachung des Hinweises auf die Patenterteilung: **16.09.2026**
(21) Anmeldenummer: 23798332.5
(22) Anmeldetag: 13.10.2023
(51) Int. Cl.: B21D 43/14, B65G 47/248, B21D 43/12

(54) **VORRICHTUNG ZUM WENDEN VON BAUTEILEN**
DEVICE FOR TURNING COMPONENTS
DISPOSITIF DE RETOURNEMENT D'ÉLÉMENTS STRUCTURAUX

(30) Priorität: 13.10.2022 AT 507952022; 13.10.2022 AT 507962022
(43) Veröffentlichungstag der Anmeldung: 20.08.2025
(73) Patentinhaber: TRUMPF Maschinen Austria GmbH & Co. KG., 4061 Pasching (AT)
(72) Erfinder: VIDOTTO, Giovanni, 10023 Chieri (IT); AUZINGER, Michael, 4040 Linz (AT)
(74) Vertreter: Burger, Hannes Alfred
(86) Internationale Anmeldenummer: PCT/AT2023/060351
(87) Internationale Veröffentlichungsnummer: WO 2024/077322

(56) Entgegenhaltungen:
- EP-A1- 2 792 622
- CN-A- 106 044 135
- CN-A- 107 352 259
- CN-A- 110 342 222
- CN-A- 110 857 179
- CN-U- 208 775 765
- DE-A1- 102008 017 420
- DE-A1- 102011 055 255
- DE-A1- 3 009 615
- DE-C- 594 036
- GB-A- 1 305 270
- JP-A- 2000 079 526
- JP-U- S54 128 271
- KR-Y1- 200 367 835
- US-A- 5 890 579

## Beschreibung

Die Erfindung betrifft eine Vorrichtung zum Wenden von plattenförmigen Bauteilen, insbesondere von Blechen, umfassend;
- eine Rotationseinheit; wobei die Rotationseinheit dazu ausgebildet ist, das Bauteil bezüglich einer Rotationsachse in einem Wendevorgang zu wenden;
- eine Fördereinheit , wobei die Fördereinheit in der Rotationseinheit aufgenommen ist und mittels der Rotationseinheit bezüglich der Rotationsachse rotierbar ist, und wobei die Fördereinheit bezüglich einer Förderrichtung einen vorderen Endbereich sowie einen hinteren Endbereich umfasst, sowie zumindest ein erstes Fördermittel und zumindest ein bezüglich der Rotationsachse gegenüberliegend angeordnetes zweites Fördermittel umfasst, und

wobei mittels des ersten Fördermittels eine erste Förderebene definiert ist und mittels des zweiten Fördermittels eine parallel zur ersten Förderebene angeordnete zweite Förderebene definiert ist, und
wobei die Fördereinheit dazu ausgebildet ist, das Bauteil zwischen der ersten und zweiten Förderebene aufzunehmen, sodass das Bauteil zwischen dem ersten und zweiten Fördermittel für den Wendevorgang aufgenommen ist.

Die JP2000079526 A offenbart eine Wendevorrichtung für Bauteile, welche die Bauteile um 180° wendet. Zur Aufnahme des Bauteils in der Wendevorrichtung sind zwei gegenüberliegende Förderebenen vorgesehen, die jeweils durch eine Anordnung von gelagerten Rollen gebildet sind. In einer Ausführungsform offenbart die Schrift eine Antriebsvorrichtung mit einem Reibriemen, mittels dessen die einzelnen Rollen in Rotation versetzt werden können, sodass diese ein in der Wendevorrichtung befindliches Bauteil bewegen können.

Die CN110857179 A offenbart eine Plattendrehmaschine, mit einer Basis und eine darauf vorgesehene Halterung, sowie, einen Übertragungsmechanismus, der an der Halterung zum Transportieren des Plattenmaterials vorgesehen ist und einen Drehmechanismus, der an der Basis vorgesehen. Ferner umfasst sie einen Ausrichtungsmechanismus, der an der Halterung vorgesehen ist, um die Platten im Übertragungsmechanismus auszurichten; sowie einen Fixiermechanismus an der Halterung zum Fixieren und Festlegen der Position der Platte in dem Übertragungsmechanismus. Der Ausrichtungsmechanismus kann dabei ferner einen Ausrichtzylinder umfassen, der an der Halterung angeordnet ist, mit einen oberen Zylinder und einen unteren Zylinder, wobei der obere Zylinder in der Nähe der oberen Förderrolle angeordnet ist, und der untere Zylinder ist in der Nähe der unteren Förderrolle gegenüberliegend angeordnet.

In der JPS54128271 U ist eine Wendevorrichtung offenbart, die gegenüberliegende Fördervorrichtung zur Aufnahme eines Werkstücks umfasst, welche bezüglich ihrer Förderebene entlang einer Förderrichtung verfahrbar ausgebildet sind. Ferner umfasst die Wendevorrichtung eine Haltevorrichtung, die in den seitlichen Randbereichen der Fördervorrichtungen angeordnet sind. Diese Haltevorrichtungen sind dabei in den Randbereichen montiert und sichern unter die zu wendenden Werkstücke vor einem Herausfallen.

Die CN110342222 A offenbart ebenfalls eine Wendevorrichtung mit in der Wendevorrichtung aufgenommenen Fördermitteln, die entlang ihrer Förderebene verfahrbar ausgebildet sind. In den seitlichen Randbereichen der Fördermittel sind Begrenzungselemente vorgesehen, welche das Werkstück im Wendevorgang sichern.

Die CN208775765 U offenbart eine Handhabungsvorrichtung für Motoren mit einem Rollenförderer und einer Wendevorrichtung, deren Rotationsachse quer zur Förderrichtung angeordnet ist. Die Wendevorrichtung umfasst Begrenzungszylinder, welcher zur Fixierung der Motoren in der Wendevorrichtung vorgesehen sind, und in einer Richtung senkrecht zu einer Förderebene des Rollenförderers verstellbar sind, wobei die Begrenzungszylinder bezüglich ihrer Position zur Rotationsachse hin mittels Montagebohrungen versetzt montiert werden können.

Die DE3009615 A1 offenbart eine Vorrichtung zum Fräsen von Bausteinen mit einem Transportband und einer an einem Gestell über dem Transportband befestigten verstellbaren Fräserwelle, bei welcher sich an das Transportband eine Beschleunigungseinrichtung für die Bausteine anschließt, sowie eine Wendeeinrichtung, welche nach der Beschleunigungseinrichtung angeordnet ist. Ferner umfasst die Wendevorrichtung eine Anordnung von Führungsleisten, welche quer zur Transportrichtung verstellbar sind, wobei diese in den seitlichen Bereichen einer Fördereinheit der Wendevorrichtung gelagert ist.

Eine ähnliche Führungsanordnung ist in der CN107352259 A beschrieben, die eine Wendevorrichtung mit einer in der Wendevorrichtung aufgenommenen Antriebsrolleneinheit offenbart, umfassend einer oberen und einer unteren Förderfläche, welche jeweils durch einzelne Rollenförderelemente gebildet sind. Zwischen den Rollenförderelementen der oberen Förderfläche und den Rollenförderelementen der unteren Förderfläche ist quer zur Förderrichtung in den rechten und linken Randbereichen jeweils eine Klemmvorrichtung vorgesehen, wobei mittels der Klemmvorrichtungen jeweils eine Klemmplatte zur Mitte der Wendevorrichtung bzw. zur Drehachse der Wendevorrichtung verstellt werden kann, sodass ein zu wendendes Bauteil mittels der beiden Klemmplatten gehalten ist.

Nachteilig bei derartigen Wendevorrichtungen aus dem Stand der Technik ist, dass die einzelnen Transportrollen ein Bauteil nicht immer ideal erfassen können, bzw. aufgrund geringfügiger Lageabweichungen und nicht idealer geometrischer Voraussetzungen von Bauteilen aufgrund von Toleranzen oder dergleichen diese Bauteile von den Förderelementen schräg aufgenommen werden oder beim Einführen in die Wendevorrichtung unbeabsichtigt verdreht werden, was zu Produktionsverzögerungen und auch Bauteilbeschädigungen führt.

Aufgabe der vorliegenden Erfindung war es, die Nachteile des Standes der Technik zu überwinden und eine Vorrichtung zum Wenden von Bauteilen zur Verfügung zu stellen, mittels derer ein Benutzer in der Lage ist, eine verbesserte Aufnahme der Bauteile in der Wendevorrichtung zu gewährleisten.

Diese Aufgabe wird durch eine Vorrichtung gemäß den Ansprüchen gelöst.

Die erfindungsgemäße Vorrichtung zeichnet sich dadurch aus, dass zumindest eines der beiden Fördermittel, umfassend das erste und zweite Fördermittel, bezüglich seiner Förderebene entlang einer Förderrichtung verfahrbar ausgebildet ist.

Durch die erfindungsgemäße Maßnahme wird das Bauteil mitsamt dem beweglichen bzw. entlang der Förderrichtung verfahrbaren Fördermittel befördert, wodurch das Bauteil im stetigen Kontakt mit Oberflächenbereichen des Fördermittel ist und an dessen Berührungspunkten bzw. Anlagebereichen mit dem Fördermittel mit verschoben wird, sodass eine Drehung oder eine Änderung der Ausrichtung des Bauteils verhindert wird. Mittels dieser Maßnahme kann das Bauteil somit gleichförmig in die Rotationseinheit mittels des verfahrbaren Fördermittels für den Wendevorgang translatorisch eingeführt werden, ohne dass dieses einzelne Förderelemente durchlaufen muss. Ebenso kann das Bauteil auch derart wieder aus der Vorrichtung ausgegeben werden. Bevorzugt kann die Förderrichtung des Bauteils parallel zur Rotationsachse angeordnet sein.

In einer Weiterbildung kann vorgesehen sein, dass die Fördereinheit zumindest eine Umlenkanordnung aufweist, wobei mittels der Umlenkanordnung das verfahrbare Fördermittel derart umlenkbar ist, dass es in einem Umlenkbereich vom jeweils anderen, gegenüberliegenden Fördermittel distanzierbar ist, sodass ein Abstand zwischen den beiden Fördermittel im Umlenkbereich größer wird. Mit der Umlenkung des Fördermittels kann in dem Umlenkbereich gleichzeitig ein Einzugsbereich für das Bauteil gebildet werden. Zur Vollständigkeit sei hierbei erwähnt, dass sich das Fördermittel im Umlenkbereich nicht mehr entlang der Förderrichtung des Bauteils bewegt.

Eine vorteilhafte Ausführungsform sieht vor, dass das verfahrbare Fördermittel bürstenartige Elemente aufweist, wobei die bürstenartigen Elemente zur Aufnahme des Bauteils vorgesehen sind. Mittels der bürstenartigen Elemente kann das Bauteil in der Bewegung des Fördermittels bezüglich der Förderrichtung aufgegriffen und mitgenommen werden. Die bürstenartigen Elemente können aus einem elastischen Material wie Elastomere oder auch Thermoplaste gefertigt sein oder aber auch aus anderen Kunststoffen und weiteren Materialien bestehen. Hinsichtlich ihrer geometrischen Form können diese vorzugsweise zylinderförmig sein und sich bezüglich einer einheitliche Höhe senkrecht von dem Fördermittel erstrecken. Bevorzugt weisen sie einen erhöhten Haftreibungskoeffizienten gegenüber dem Bauteil auf, sodass diese das Bauteil in der Bewegung des Fördermittels verbessert mitnehmen können. Bevorzugt sind die bürstenartigen Elemente über eine Gesamtbreite der Fördermittel angeordnet, bzw. deren gesamten Oberfläche zur Beförderung des Bauteils. Bezüglich deren elastischen Verformung sind diese vorzugsweise derart gewählt, dass diese eine dennoch ausreichende Steifigkeit aufweisen, um das Bauteil in Förderrichtung mitnehmen (bzw. einziehen) zu können.

Weiters kann vorgesehen sein, dass ein Abstand der bürstenartigen Elemente zur Förderebene des gegenüberliegenden Fördermittels derart gewählt ist, dass der Abstand geringer ist als eine Dicke eines aufzunehmenden Bauteils. Mittels einer derartigen Ausgestaltung sind die bürstenartigen Elemente optimal an das Bauteil andrückbar, um dieses mit dem verfahrbaren Fördermittel (über die bürstenartigen Elemente) bewegen zu können.

Erfindungsgemäß ist vorgesehen, dass die Fördereinheit eine Anschlaganordnung zur Anlage des Bauteils im Wendevorgang umfasst, wobei die Anschlaganordnung parallel bezüglich der ersten Förderebene und senkrecht zur Rotationsachse verstellbar ist. Diese Maßnahme trägt erheblich zur Qualität der Bauteile bei, da die Anschlaganordnung für den Wendevorgang an das Bauteil herangeführt werden kann, sodass sich dieses aufgrund der Schwerkraft beim Wenden nicht verschiebt. Weiters kann das Bauteil mit einer verstellbaren Anschlaganordnung ausgerichtet werden. Besonders in Kombination mit den zuvor erwähnten bürstenartigen Elementen kann dieses Richten einfacher und schonender für das Bauteil erfolgen.

Dabei ist die Anschlaganordnung über eine Gesamtlänge der Fördereinheit angeordnet und in einem vorderen und hinterem Endbereich der Fördereinheit gelagert, sodass diese unabhängig von den Bewegungen der Fördermittel verstellt werden kann. Dadurch kann das Bauteil über die Gesamtlänge der Fördereinheit entlang der Anschlaganordnung geführt werden und bereits bei seiner Auflage auf den Fördermitteln an dieser geführt, sodass eine Kollision mit einer Stirnseite der Anschlaganordnung in der Fördereinheit ausgeschlossen ist. Eine derartige (vorzugsweise ausschließliche) Lagerung in den Endbereichen der Fördereinheit ermöglicht, eine verbesserte geradlinige Führung der Bauteile mittels der Anschlaganordnung vorzunehmen, indem die zwei (Lager-) Punkte zur Lagerung der Anschlaganordnung weitmöglichst in Förderrichtung voneinander entfernt sind und somit deren Verbindungsgerade eine bestmögliche lagestabile Ausrichtung der Bauteile, unabhängig von deren Position (entlang der Förderrichtung) ermöglicht, sowie ein möglichst stabiles Einführen entlang der Anschlaganordnung bereits in einem Endbereich, ohne die Anschlaganordnung z.B. elastisch zu verformen bzw. verstellen zu können, -womit bereits eine geringfügige Lageänderung einhergehen würde.

Somit kann die Lagerung der Anschlaganordnung in den Endbereichen bevorzugt außerhalb eines gesamten (möglichen) Bewegungsbereiches der Fördermittel vorgesehen sein, wobei die Anschlaganordnung parallel zur den Förderebenen durch die Fördereinheit hindurchgeführt ist und ferner die Fördermittel in den Endbereichen der Fördereinheit überragen kann bzw. in diesem Bereich geringfügig hervorstehen kann. Die erforderlichen Verstellmechanismen können dabei in Form von Riemen oder dergleichen vorgesehen sein, welche ebenfalls in den Endbereichen vorgesehen sein können und die Anschlaganordnung jeweils in den Endbereichen synchron verstellen zu können. Bei einer zuvor erwähnten Umlenkanordnung ist die Lagerung der Anschlaganordnung in den jeweiligen Endbereichen somit dem jeweiligen Umlenkbereich in Förderrichtung nachgelagert, bzw. außerhalb diesem angeordnet.

In einer Ausführungsform kann vorgesehen sein, dass das zumindest eine verfahrbare Fördermittel mittels eines Zugmitteltriebes, insbesondere einem umlaufenden Riemen, verfahrbar ist.

Darüber hinaus kann besonders vorteilhaft sein, wenn das zumindest eine verfahrbare Fördermittel einzelne stabförmige Förderelemente umfasst; wobei die stabförmigen Förderelemente quer zur Förderrichtung angeordnet sind. Mittels der stabförmigen Förderelemente ist ein verbessertes Aufgreifen eines Bauteils möglich, da es mittels der Stabform in einem Einzugsbereich leichter erfassbar ist als z.B. mit einer durchgehenden Oberfläche, wie bei einem Förderband.

So können die stabförmigen Förderelemente besonders bevorzugt an dem Zugmitteltrieb derart starr befestigt sein, dass diese bezüglich dessen Umlaufrichtung ihre Ausrichtung gegenüber dem Zugmitteltrieb behalten. So würde eine zur Aufnahme des Bauteil vorgesehene Fläche des Förderelements bezüglich der Umlaufrichtung beispielsweise immer tangential zum Zugmitteltrieb ausgerichtet sein
Eine weitere Ausführung sieht vor, dass die stabförmigen Förderelemente bezüglich einer Länge des Zugmitteltriebs nur innerhalb eines Zugmittelabschnittes bzw. Riemenabschnittes angeordnet sind, wobei der Zugmittelabschnitt 30% bis 60 % der Länge des Zugmitteltriebs beträgt. Vorteilhaft ist hierbei, dass die Förderelemente außerhalb der Förderebene in einer Warteposition verlagert werden können und somit ein Bauteil kollisionsfrei in der Fördereinheit zugeführt werden kann, und die Förderelemente mit dem Bauteil in die Förderebene verbracht werden. Weiters kann mit dieser Ausgestaltung ein reibungsfreier Förderbetrieb durch die Vorrichtung ermöglicht werden, wenn z.B. die Bauteile nicht gewendet werden sollen, und nur durch die Vorrichtung hindurchgeführt, sodass z.B. die Förderelemente des oben liegenden Fördermittels nicht benötigt werden.

Besonders bevorzugt kann dabei vorgesehen sein, dass die stabförmigen Förderelemente einen polygonalen, insbesondere rechteckigen Querschnitt aufweisen. Vorteilhaft bei dieser Querschnittsform ist die quer verlaufende Kante, welche durch den Querschnitt gebildet wird und einen Einzug des Bauteils sowie dessen Ausschub aus der Vorrichtung besonders begünstigt.

Vorteilhaft kann sein, wenn die Fördereinheit zwischen dem ersten und zweiten Fördermittel eine seitliche Zugangsöffnung aufweist, wobei mittels der Zugangsöffnung ein Zuführen eines plattenförmigen Bauteils zwischen der ersten und zweiten Förderebene quer zur Förderrichtung ermöglicht ist. Durch diese Maßnahme ist ein Einlegen von Bauteilen maschinell oder per Hand quer zur Förderrichtung möglich, ohne die Anlage betreten zu müssen bzw. benachbarte Anlagen zu behindern. Ferner kann in einer Weiterbildung vorgesehen sein, dass die Zugangsöffnung dazu vorgesehen ist, Bauteile mittels der verstellbaren Anschlaganordnung aus der Zugangsöffnung ausgeben zu können.

Fener kann vorgesehen sein, dass das erste und zweite Fördermittel synchron zueinander verfahrbar sind. Somit kann das Bauteil mit beiden Fördermitteln gleichzeitig aufgenommen und ausgeworfen werden, sowie noch prozesssicherer geführt.

Eine Ausführungsform sieht vor, dass die Rotationseinheit zumindest zwei konzentrisch zur Rotationsachse angeordnete ringförmige Elemente umfasst, wobei die Fördereinheit zwischen den zwei ringförmigen Elementen aufgenommen ist.

Zudem kann vorgesehen sein, dass die ringförmigen Elemente starr mit der Fördereinheit verbunden und rotierbar sind, wobei die ringförmigen Elemente drehbar in einer Lageranordnung aufgenommen sind. Mittels dieser Ausgestaltung ist ein vibrationsarmes und harmonisches Wenden möglich.

Zum besseren Verständnis der Erfindung wird diese anhand der nachfolgenden Figuren näher erläutert.

Es zeigen jeweils in stark vereinfachter, schematischer Darstellung:
- Fig. 1: eine Vorrichtung zum Wenden von plattenförmigen Bauteilen;
- Fig. 2: eine Ausführung eines verfahrbaren Fördermittels in Seitenansicht;
- Fig. 3: die bürstenartigen Elemente in Detailansicht;
- Fig. 4: eine mögliche Ausbildung einer Rotationseinheit;
- Fig. 5: eine Tragstruktur zur Aufnahme der Rotationseinheit in Schrägansicht;
- Fig. 6: eine Detailansicht eines Fördermittels mit stabförmigen Förderelementen;
- Fig. 7: eine Weiterbildung eines Fördermittels;
- Fig. 8: eine weitere Ausführungsform eines Fördermittels.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

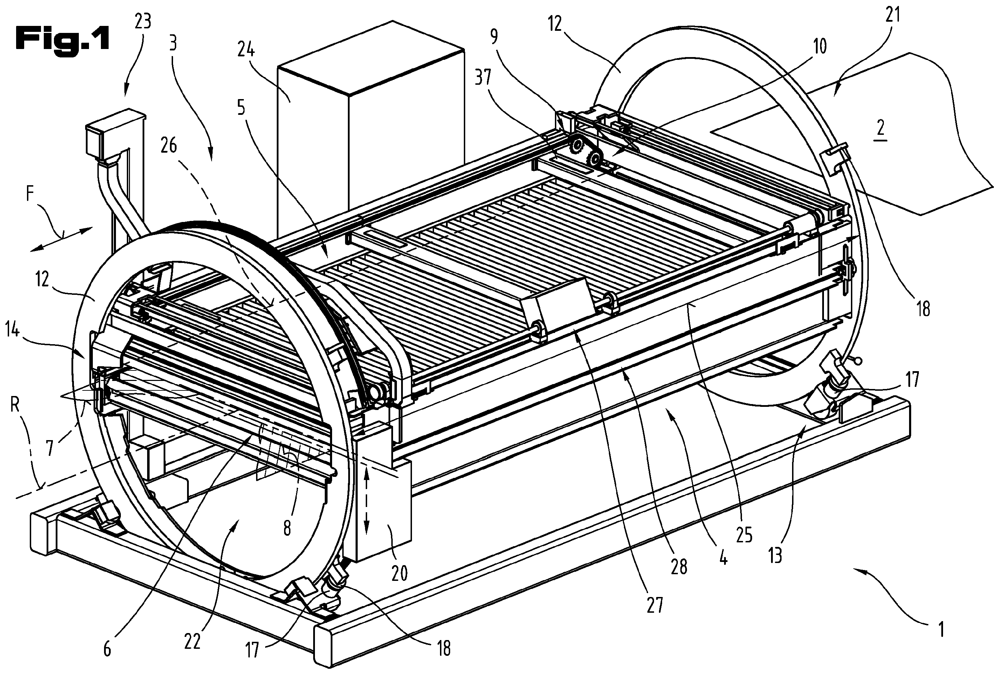

In Fig. 1 ist eine erfindungsgemäße Vorrichtung 1 zum Wenden von plattenförmigen Bauteilen 2, insbesondere von Blechen, dargestellt.

Sie umfasst eine Rotationseinheit 3, die dazu ausgebildet ist, ein Bauteil 2 bezüglich einer Rotationsachse R in einem Wendevorgang zu wenden; sowie eine Fördereinheit 4, welche in der Rotationseinheit 3 aufgenommen ist und mittels der Rotationseinheit 3 bezüglich der Rotationsachse R rotierbar ist.

Die Fördereinheit 4 umfasst zumindest ein erstes Fördermittel 5 und ein bezüglich der Rotationsachse R gegenüberliegend angeordnetes zweites Fördermittel 6, wobei mittels des ersten Fördermittels 5 eine erste Förderebene 7 definiert ist und mittels des zweiten Fördermittels 6 eine parallel zur ersten Förderebene 7 angeordnete, gegenüberliegende zweite Förderebene 8 definiert ist.

Die Fördereinheit 4 ist dazu ausgebildet, das Bauteil 2 zwischen der ersten und zweiten Förderebene 7,8 aufzunehmen, sodass das Bauteil 2 zwischen dem ersten und zweiten Fördermittel 5,6 für den Wendevorgang aufgenommen ist.

Zumindest eines der beiden Fördermittel, umfassend das erste und zweite Fördermittel 5,6, ist bezüglich seiner Förderebene entlang einer Förderrichtung F verfahrbar ausgebildet.

Die Fördereinheit 4 weist bevorzugt zumindest eine Umlenkanordnung 9 auf, wobei mittels der Umlenkanordnung 9 das verfahrbare Fördermittel derart umlenkbar ist, dass es in einem Umlenkbereich 10 vom jeweils anderen, gegenüberliegenden Fördermittel distanzierbar ist, sodass ein sich Abstand zwischen den beiden Fördermitteln, bzw. zu der gegenüberliegenden Förderebene, vergrößert. Mit anderen Worten ist zumindest ein Teilabschnitt des verfahrbaren Fördermittels außerhalb seiner Förderebene verlagerbar. Wie ferner ersichtlich ist das Fördermittel bevorzugt innerhalb bzw. in der Fördereinheit verfahrbar.

Wie ebenfalls angedeutet weist die Vorrichtung 1 bezüglich der Förderrichtung F einen vorderen Endbereich 21 sowie einen hinteren Endbereich 22 auf. Das Bauteil 2 kann wie dargestellt im vorderen Endbereich 21 der Fördereinheit 4 zugeführt werden, bzw. von dem verfahrbaren Fördermittel eingezogen werden und im hinteren Endbereich 22 wieder an eine nachgeordnete Anlage ausgegeben. Weiters kann mittels des verfahrbaren Fördermittels das Bauteil 2 auch im selben Endbereich eingezogen und wieder ausgegeben werden.

Bezüglich des Verfahrens des Fördermittels weist die Fördereinheit 4 bevorzugt ein Antriebsmittel 20 auf, welche ebenfalls mit der Fördereinheit 4 mit gedreht werden kann. Diesbezüglich können Versorgungsleitungen 23 zum Antriebsmittel 20 geführt sein, wie dargestellt, welche flexibel ausgebildet sind, sodass diese bei der Drehung nicht beschädigt werden. Zur Vollständigkeit sei herbei erwähnt, dass bevorzugt sämtlich Anlagenteile, welche mit der Rotationseinheit 3 drehbar sind und eine externe Energieversorgung oder auch eine Datenübertragung oder dergleichen benötigen, über eine derartige Versorgungsleitung 23 verbunden sind. Die Versorgungsleitungen 23 sind bevorzugt mit einer Steuerungsvorrichtung 24, welche zur Steuerung der gesamten Vorrichtung 1 vorgesehen ist.

Wie ebenfalls dargestellt kann die Rotationseinheit 3 zumindest zwei konzentrisch zur Rotationsachse R angeordnete ringförmige Elemente 12 umfassen, wobei die Fördereinheit 4 zwischen den zwei ringförmigen Elementen 12 aufgenommen ist. Wie eingangs erwähnt können die ringförmigen Elemente 12 bevorzugt starr mit der Fördereinheit 4 verbunden und rotierbar sein, wobei die ringförmigen Elemente 12 drehbar in einer Lageranordnung 13 aufgenommen sind.

Die erfindungsgemäße Vorrichtung 1 bzw. die Fördereinheit 4 umfasst eine Anschlaganordnung 14 zur Anlage des Bauteils 2 im Wendevorgang, wobei die Anschlaganordnung 14 parallel bezüglich der ersten Förderebene 5 und senkrecht zur Rotationsachse R verstellbar ist. Mittels der Anschlaganordnung 14 in eine Anschlagebene bzw. Anschlagfläche zwischen dem ersten und zweiten Fördermittel bzw. zwischen dessen Förderebene definiert, welche Anschlagebene bevorzugt senkrecht zu diesen angeordnet ist und parallel zur Rotationsachse R. Die Anschlaganordnung 14 ist dabei über eine Gesamtlänge 25 der Fördereinheit 4 bzw. Fördermittel angeordnet und zumindest in deren Endbereichen 21,22 gelagert, sodass diese unabhängig von deren Bewegungen verstellt werden kann. Die Anschlaganordnung 14 befindet sich in der gezeigten Variante in einer Warteposition 26, sodass sie auch ein Bauteil 2 bei einem Einschub bzw. Einzug entlang der Förderrichtung F nicht behindert.

Zur Verstellung der Anschlaganordnung 14 kann bevorzugt ein Antrieb 27 vorgesehen sein, mittels welchen die Anschlaganordnung 14 bevorzugt linear verschiebbar ist, wie im dargestellten Beispiel quer zur Rotationsachse R. Wie weiters dargestellt, kann die Antriebsanordnung 27 ebenfalls eine Art Zugmittel bzw. Riemen umfassen, sowie weitere, aus dem Stand der Technik bekannte Vorrichtungen, welche zum Verstellen der Anschlaganordnung geeignet sind. Weiters ist die Antriebsanordnung 27 bevorzugt dazu vorgesehen, die Anschlaganordnung bezüglich ihrer jeweiligen Lagerung in beiden Endbereichen 21,22 gleichzeitig zu verstellen, wie ebenfalls ersichtlich ist. Diesbezüglich sind einzelne Antriebselemente von der Antriebsanordnung 27 zu den Endbereichen geführt. Die Anschlaganordnung kann zudem einen Drucksensor oder dergleichen aufweisen, mittels dessen ein Anschlag des in der Fördereinheit 4 befindlichen Bauteils bei Verstellen der Anschlaganordnung bestimmt werden kann, bzw. auch ein Anliegen dies Bauteils im Wendevorgang.

Zwischen den Endbereichen 21,22 ist die Anschlaganordnung 14 parallel zur den Förderebenen (zwischen den Fördermittel) durch die Fördereinheit 4 hindurchgeführt und vorzugsweise auch parallel zu der Rotationsachse angeordnet.

Zudem kann der Anschlaganordnung 14 bezüglich Rotationsachse R gegenüberliegend eine zweite Anschlaganordnung angeordnet sein, sodass ein Bauteil zwischen den beiden Anschlaganordnungen aufgenommen ist. Die zweite Anschlaganordnung kann eine starre Bezugsbasis ausbilden oder ebenfalls senkrecht zur Rotationsachse R verstellbar sein.

Ferner kann die Fördereinheit 4 eine seitliche Zugangsöffnung 28 aufweisen, welche zum Bestücken der Vorrichtung mit einem Bauteils 2 quer zur Förderrichtung F vorgesehen ist. So kann beispielsweise mittels der Zugangsöffnung 28 ein manuelles Einlegen von Bauteilen ermöglicht werden, ohne dabei benachbarte Anlagen der Vorrichtung 1 zu betreten. Wie eingangs erwähnt, kann auch vorgesehen sein, dass über die Zugangsöffnung 28 Bauteile mittels der verstellbaren Anschlaganordnung 14 ausgeben werden können.

Bezüglich der Rotation können bevorzugt Begrenzungselemente 17 vorgesehen werden, welche z.B. als Anschlag für eine vollständige durchgeführte Drehung dienen. Komplementär dazu können an drehbaren Bereichen, insbesondere den ringförmigen Elementen 12, zur Begrenzung dienende Stopper 18 vorgesehen sein.

Weiters kann vorgesehen sein, dass beide Fördermittel verfahrbar ausgebildet sind, insbesondere synchron zueinander, sodass das Bauteil von beiden Fördermitteln aufgenommen wird und entlang der Förderrichtung F bewegbar ist.

Die Fördereinheit 4 kann zudem eine Anordnung zur Höhenverstellung von zumindest einem der Fördermittel aufweisen, sodass ein Abstand zwischen den beiden Fördermitteln einstellbar ist. Bevorzugt sind die Antriebsmittel 20 dazu ausgebildet, sowie zum Antreiben des Zugmittelts mittels der dargestellten Räder.

Die Vorrichtung kann zudem Positionsmittel 37 zur Feststellung einer Lage bzw. erfolgten Rotation der Rotationseinheit 3 umfassen. Die Mittel können beispielsweise einen Neigungssensor umfassen.

Ferner kann die Vorrichtung Lichtschranken zur Detektion eines aufgenommenen oder ausgegebenen Bauteils in den Endbereichen 21,22 aufweisen, welche bevorzugt mit der Steuerungsvorrichtung verbunden sind. Die Lichtschranken können auch z.B. zur Unterstützung des verfahrbaren Fördermittels vorgesehen sein, sodass dessen Betrieb durch die Lichtschranken bezüglich Bauteilpositionen, etc. unterstützt wird.

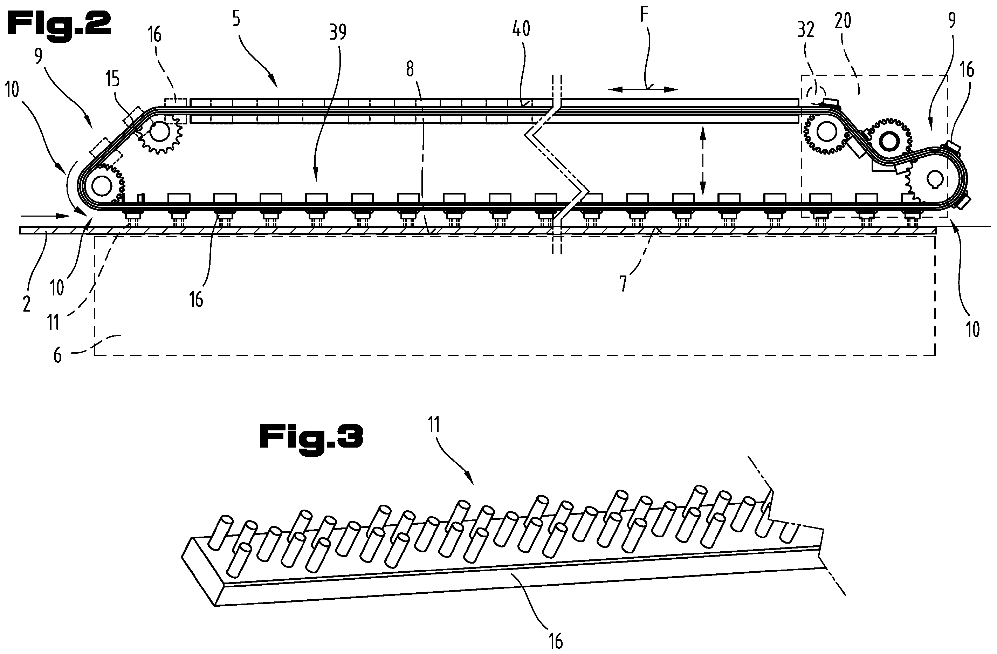

In Fig. 2 ist eine Ausführung eines verfahrbaren Fördermittels 5 in Seitenansicht dargestellt. Bevorzugt weist das Fördermittel einen Zugmitteltrieb 15, insbesondere einen umlaufenden Riemen auf, mittels welchen eine Verstellung des Fördermittels 5 entlang der Förderrichtung F erfolgen kann. Das Fördermittel kann z.B. auch in der Form eines Förderbandes ausgebildet sein. An diesem Punkt sei erwähnt, dass anstelle des Riemens auch eine Kette oder dergleichen verwendet werden kann, welches die Funktion eines derart umlaufenden Elementes erfüllt. Zudem kann der Zugmitteltrieb endlos umlaufend oder aber auch unterbrochen ausgebildet sein, und zwischen 2 Endstellungen verfahrbar.

Wie ebenfalls dargestellt, kann das Fördermittel 5 jedoch bevorzugt einzelne stabförmige Förderelemente 16 umfassen; wobei die stabförmigen Förderelemente 16 quer zur Förderrichtung F (bevorzugt quer zur Rotationsachse R) angeordnet sind. Zudem können die stabförmigen Förderelemente 16 an dem Zugmitteltrieb 15 befestigt sein und mit diesem umlaufend ausgebildet. Bei dieser Ausführungsform kann jeweils ein Zugmittel in den seitlichen Randbereichen der Fördereinheit angeordnet sein und die stabförmigen Förderelemente 16 zwischen zwei Zugmitteln befestigt, sodass sich diese über die Breite quer zur Förderrichtung F der Fördereinheit erstrecken. Alternativ kann auch eine Schubkette oder andere umlaufende Fördervorrichtungen vorgesehen sein.

Die Förderelemente des Fördermittels 5 können derart ausgebildet sein, dass sie endlos umlaufend sind. Es kann aber auch sein, dass diese zur Beförderung eines Bauteils entlang der Förderrichtung F bezüglich der Umlaufrichtung der Förderelemente Endanschläge oder dergleichen aufweisen, sodass sich diese lediglich in einem Bestimmten Bereich (bezüglich ihrer Umlaufrichtung) bewegen. Zur Feststellung der Position oder auch einer Endposition können Feststellungsmittel 32 vorgesehen sein. Die Feststellungsmittel können Detektoren, Magnetsensoren, mechanische Schalter etc. umfassen. Weiters können diese wiederum mit der Steuerungsvorrichtung verbunden sein. So kann beispielsweise vorgesehen sein, dass sich die Förderelemente in einer Warteposition für ein aufzunehmendes Bauteil befinden, und somit ein überwiegender Anteil oder alle Förderelemente aus der Förderebene verbracht sind und bei Aufnahme eines Bauteils erst mit diesem in die Förderebene verfahren werden.

Besonders bevorzugt weist das verfahrbare Fördermittel, bzw. die stabförmigen Förderelemente 16 bürstenartige Elemente 11 auf, Wie in Fig. 3 im Detail dargestellt ist, wobei die bürstenartigen Elemente zur Aufnahme des Bauteils 2 vorgesehen sind. Die bürstenartigen Elemente 11 sind an der dem Bauteil 2 zugewandten Oberfläche des Fördermittels 5 angeordnet.

Die bürstenartigen Elemente 11 sind bevorzugt elastisch verformbar und können aus einem elastischen Material wie Elastomere oder auch Thermoplaste gefertigt sein oder aber auch aus anderen Kunststoffen und weiteren Materialien bestehen. Bevorzugt weisen sie eine höhere Haftreibung gegenüber dem Bauteil auf, sodass diese das Bauteil 2 in der Bewegung des Fördermittels bezüglich der Förderrichtung F aufgreifen und mitnehmen können. Alternativ kann anstelle der bürstenartigen Elemente eine Beschichtung oder dergleichen mit einem erhöhten Reibungskoeffizienten an der Oberfläche des Fördermittels vorgesehen sein. Ferner sind Fig. 3 die bürstenartigen Elemente 11 in der gezeigten Ausführung auf einem stabförmigen Förderelement 16 angeordnet.

Wie ebenfalls aus Fig. 3 ersichtlich, erstrecken sich die bürstenartigen Elemente bevorzugt senkrecht von der Oberfläche der jeweiligen Förderelemente, (bzw. von einer Oberfläche des Fördermittels), sodass diese im Bereich der Förderebene bei einer dementsprechenden Ausrichtung der Förderelemente bzw. Fördermittel ebenfalls senkrecht zu dieser angeordnet sind, bzw. senkrecht zu einem aufzunehmenden Bauteil, gemäß Fig. 2. Wie ferner aus Fig. 2 und Fig. 3 ersichtlich, weisen die bürstenartigen Elemente 11 bevorzugt eine einheitliche bzw. gleiche Höhe (gegenüber der Oberfläche der Förderelemente, bzw. des Fördermittels) auf. Weiters sind diese bevorzugt über die gesamte Oberfläche der Förderelemente zur Aufnahme des Bauteils angeordnet und gleichmäßig verteilt.

Das zweite Fördermittel 6 ist in Fig. 2 strichliert angedeutet und kann in einer Ausführungsform auch nicht verfahrbar ausgebildet sein und z.B. drehbar gelagerte Rollen oder dergleichen zur Anlage des Bauteils aufweisen. An diesen Punkt sei erwähnt, dass bei der Verwendung von einem verfahrbaren Fördermittel sowie auch einen nicht verfahrbaren Fördermittel die Anordnung der gezeigten Fördermittel auch umgekehrt sein kann, sodass das verfahrbare Fördermittel unten ist, etc.

So kann beispielsweise das Bauteil in dem ausgebildeten Spalt im Umlenkbereich 10 der Umlenkanordnung 9 mittels der bürstenartigen Elemente 11 eingezogen, bzw. auch in diesem Bereich an eine benachbarte Anlage wieder ausgegeben werden. Bei einer zuvor erwähnten Ausgestaltung von zwei zueinander synchron verfahrbaren Fördermitteln kann das zweite Fördermittel 6 symmetrisch zu dem ersten Fördermittel 5 ausgebildet sein.

Bezüglich der zuvor erwähnten Höhenverstellung des Fördermittels kann auch vorgesehen sein, dass z.B. die Antriebsräder des Zugmitteltriebes einstellbar sind, sodass der Abstand des Fördermittels zum gegenüberliegenden Fördermittel veränderbar ist.

Weiters ist in Fig. 2 eine ursprüngliche Position der stabförmigen Förderelemente 16 strichliert angedeutet, in welcher Position sich die Förderelemente vor dem Aufnehmen des Bauteils 2 befanden. Diesbezüglich kann vorgesehen sein, dass die stabförmigen Förderelemente 16 bezüglich einer Länge 40 des Zugmittels 15 nur innerhalb eines Zugmittelabschnittes 39 angeordnet sind, wobei der Zugmittelabschnitt 39 30% bis 60 % der Länge 40 beträgt. Die Länge 40 beträgt bei einem umlaufenden Zugmitteltrieb bzw. Riemen dessen Gesamtlänge.

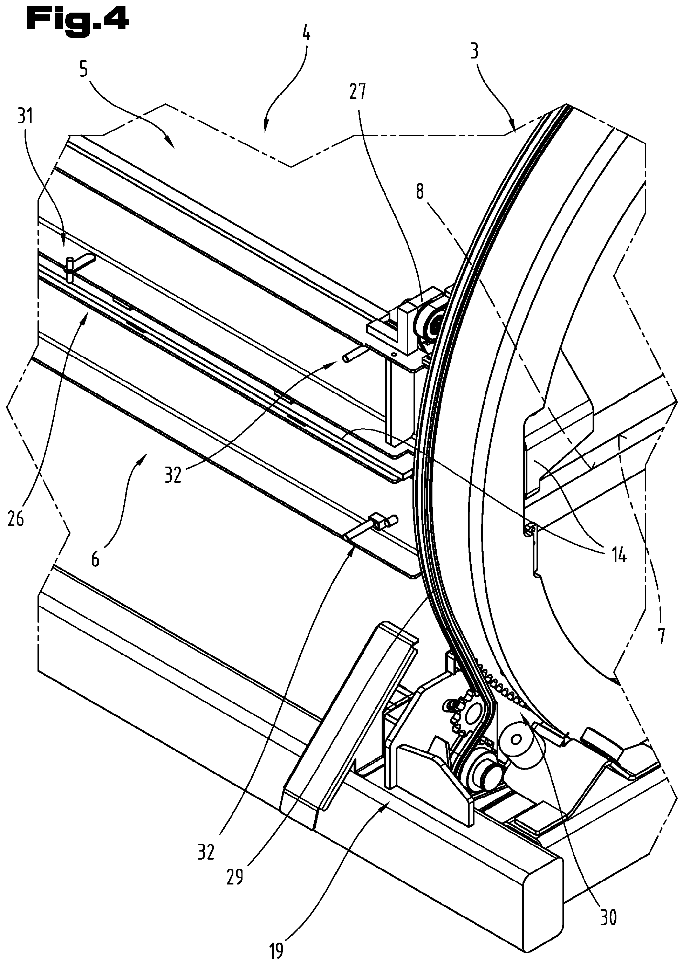

In Fig. 4 ist eine Detailansicht auf eine mögliche Ausbildung einer Rotationseinheit 3 dargestellt, bei dem die Rotationseinheit 3 mittels einer Kettenanordnung 29 oder Riemenanordnung angetrieben wird. Dabei weisen die ringförmigen Elemente 12 bevorzugt eine Verzahnung 30 auf, welche mit der Anordnung 29 wirkverbunden ist. Vorteilhaft bei einer derartigen Ausgestaltung ist, dass mittels der Kette eine einfache und schnelle Drehung der Rotationseinheit ermöglicht werden kann, anstelle eines z.B. direkten Zahnradantriebes.

Weiters ist unabhängig davon in der Fig. 4 ein Detektor 31 angedeutet, welche die Anschlaganordnung 14 in ihrer Warteposition 26 detektiert. Weiters kann der Detektor 31 dazu vorgesehen sein, bezüglich dem Vorhandensein der Anschlaganordnung 14 in ihrer Warteposition 26 ein Ein/Aus Signal an die Steuerungsvorrichtung zu übermitteln.

Zudem können Kalibrierungs- und Feststellungsmittel 32 für die verfahrbaren ersten und zweiten Fördermittel vorgesehen sein, sodass deren Position kalibriert/bestimmt werden kann. Weiters können diese eine Art Endanschlag oder Endposition des verfahrbaren Fördermittels ausbilden, bezüglich einer Einzug- oder einer Ausschubstellung bezüglich des Bauteils.

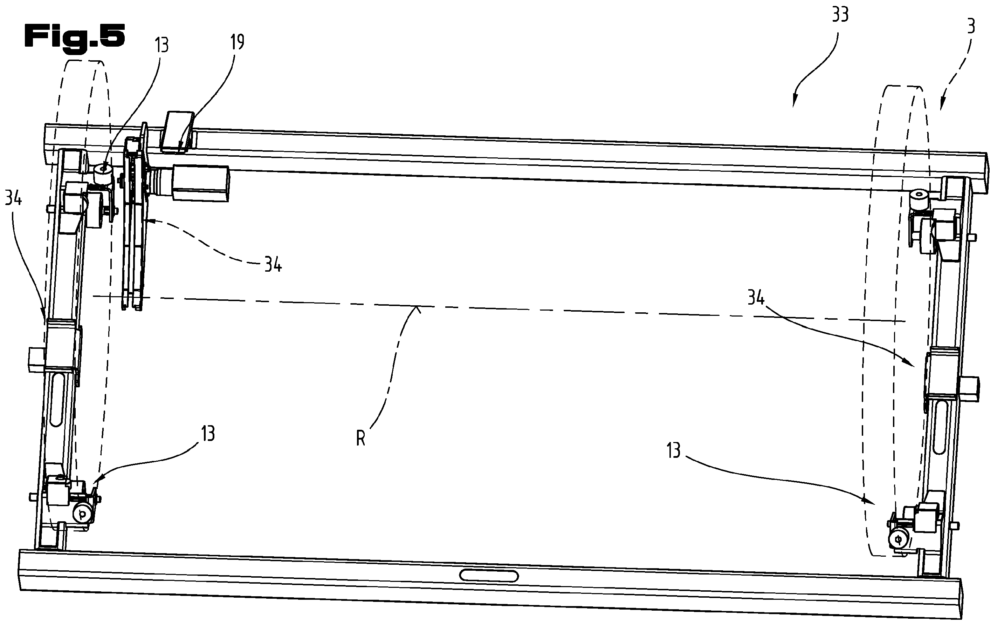

In Fig. 5 ist ein Rahmen bzw. eine Tragstruktur 33 zur Aufnahme der Rotationseinheit 3 in Schrägansicht dargestellt. Dabei umfasst der Rahmen eine Lageranordnung 13 zur Aufnahme der Ringförmigen Elemente 12. Die ringförmigen Elemente 12 sind starr mit der Fördereinheit verbunden und rotierbar, wobei die ringförmigen Elemente 12 drehbar in der Lageranordnung 13 aufgenommen sind. Bezüglich der Rotationsachse R ist die Rotationseinheit 3 an ihren Stirnenden gegen eine axiale Verschiebung gesichert. Bevorzugt können in diesen Bereichen auch noch Bremsvorrichtungen vorgesehen sein, welche die Rotationseinheit in Rotationsrichtung hemmen können, z.B. eine Sicherheitsbremse. Die Antriebseinheit 19 der Rotationseinheit 3 ist bevorzugt starr an der Tragstruktur 33 angeordnet. Weiters sind die möglichen Begrenzungselemente 17 für die Rotationseinheit dargestellt.

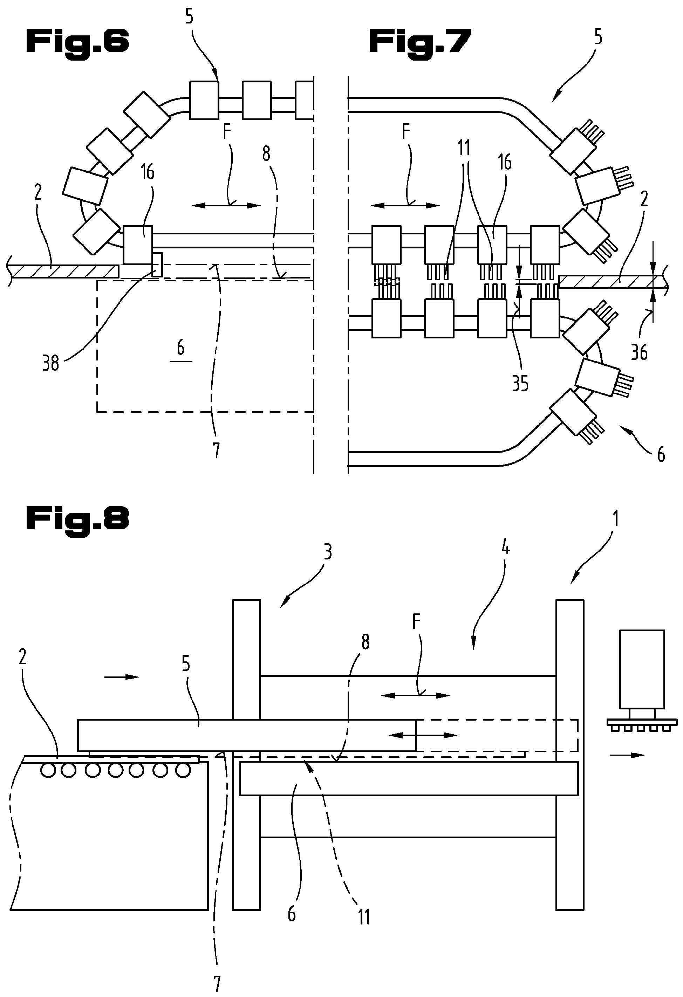

In Fig. 6 und 7 ist eine Detailansicht eines Fördermittels mit den stabförmigen Förderelementen 16 dargestellt. Die stabförmigen Förderelemente 16 weisen bevorzugt einen polygonalen, insbesondere einen rechteckigen Querschnitt auf. Wie dargestellt ist, kann mittels des polygonalen Querschnittes ein Einzug eines Bauteiles verbessert erfolgen, nämlich in dem Bereich, wo die Förderelemente vom Radius der Umlenkvorrichtung in die Förderebene überführt werden. Weiter ist eine Ausgabe bzw. ein Auswurf des Bauteils besser durchführbar, da mittels der Querschnittsform eine Art Schubkante gebildet ist.

Weiters kann vorgesehen sein, dass ein Abstand 35 der bürstenartigen Elemente 11 zur Förderebene des gegenüberliegenden Fördermittel derart gewählt ist, dass der Abstand 35 geringer ist als die Dicke 36 eines aufzunehmenden Bauteils 2, sodass sich die bürstenartigen Elemente 11 bei der Aufnahme des Bauteils 2 geringfügig elastisch verformen, wodurch das Bauteil 2 optimal zwischen den Fördermitteln aufgenommen wird. Zudem ist diese Ausgestaltung vorteilhaft für unterschiedliche Bauteildicken. Ferner kann vorgesehen sein, dass sich bezüglich der Fördermittel 5,6 gegenüberliegende bürstenartige Elemente 11 überlappen, wie in Fig. 7 strichliert angedeutet ist.

Zur Vollständigkeit sei allgmein zu den Figuren 2, 3 und7 erwähnt, dass die bürstenartigen Elemente bezüglich ihrer Elastizität eine ausreichende Steifigkeit aufweisen, um das Bauteil 2 geradlinig geführt mitnehmen zu können. Wie aus diesen Figuren ersichtlich, können die sich senkrecht erstreckenden bürstenartigen Elemente in Form von Zylindern ausgebildet sein.

Ferner kann das verfahrbare Fördermittel 5, unabhängig von seiner Ausführung, einen Positionieranschlag 38 aufweisen, welcher zum Anschlagen eines aufzunehmenden Bauteils in Förderrichtung F vorgesehen ist, wie in Fig. 6 angedeutet ist. Der Positionieranschlag 38 kann beispielsweise vorgesehen sein, um ein aufzunehmendes Bauteil beim Einführen auszurichten. Ferner kann der Positionieranschlag eine Sensorik (z.B. Druck) aufweisen, welcher das verfahrbare Fördermittel 5 veranlasst, mit dem Bauteil zu verfahren. Beispielsweise kann dieser 2 beabstandete Sensoren aufweisen, um die Anlage einer Längskante des Bauteil zu detektieren. Der Positionieranschlag 38 kann beispielsweise durch eine Leiste gebildet sein, welche sich von der Förderebene 7 des verfahrbaren Fördermittels 5 in Richtung der gegenüberliegenden Förderebene 8 erstreckt.

Weiters kann der Positionieranschlag 38 mit einer verstellbaren Anschlaganordnung gekoppelt sein, sodass deren Verstellung erst freigegeben wird, wenn der Positionieranschlag eine bestimmten Punkt der Fördereinheit erreicht hat. So kann auch vorgesehen sein, dass der Positionieranschlag 38 als Sperre für einzuführende Bauteile 2 dient, sofern die Vorrichtung 1 sich in einem nicht betriebsbereiten Zustand befindet.

In Fig. 8 ist eine alternative Ausführungsform der Fördereinheit 4 dargestellt, bei dem zumindest eines der beiden Fördermittel entlang der Förderrichtung F derart verfahrbar ist, dass sich dieses zumindest abschnittsweise von der Vorrichtung 1 in Förderrichtung F nach außen verlagert und somit ein Bauteil 2 außerhalb der Vorrichtung 1 überlagert. Somit können Bauteile 2 an das Fördermittel 5 abgegeben werden, bzw. von diesem von benachbarten Anlagen abtransportiert werden, bzw. an benachbarte Anlagen in dieser Form auch weitergeben. Das verfahrbare Fördermittel 5 kann dabei wieder bürstenartige Elemente aufweisen.

In der Fig. 8 ist eine weitere und gegebenenfalls für sich eigenständige Ausführungsform der Vorrichtung gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Figuren hingewiesen bzw. Bezug genommen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Vorrichtung | 29 | Kettenanordnung |
| 2 | Bauteil | 30 | Verzahnung |
| 3 | Rotationseinheit | 31 | Detektor |
| 4 | Fördereinheit | 32 | Feststellungsmittel |
| 5 | erste Fördermittel | 33 | Tragstruktur |
| 6 | zweite Fördermittel | 34 | Bremsvorrichtung |
| 7 | erste Förderebene | 35 | Abstand |
| 8 | zweite Förderebene | 36 | Dicke |
| 9 | Umlenkanordnung | 37 | Positionsmittel |
| 10 | Umlenkbereich | 38 | Positionieranschlag |
| 11 | bürstenartige Elemente | 39 | Zugmittelabschnitt |
| 12 | ringförmige Elemente | 40 | Länge |
| 13 | Lageranordnung | | |
| 14 | Anschlaganordnung | | |
| 15 | Zugmitteltrieb | | |
| 16 | stabförmige Förderelemente | | |
| 17 | Begrenzungselemente | | |
| 18 | Stopper | | |
| 19 | Antriebseinheit | | |
| 20 | Antriebsmittel | | |
| 21 | vorderer Endbereich | | |
| 22 | hinterer Endbereich | | |
| 23 | Versorgungsleitung | | |
| 24 | Steuerungsvorrichtung | | |
| 25 | Gesamtlänge | | |
| 26 | Warteposition | | |
| 27 | Antrieb | | |
| 28 | Zugangsöffnung | | |

## Patentansprüche

1. Vorrichtung (1) zum Wenden von plattenförmigen Bauteilen (2), insbesondere von Blechen, umfassend
- eine Rotationseinheit (3), wobei die Rotationseinheit (3) dazu ausgebildet ist, das Bauteil (2) bezüglich einer Rotationsachse (R) in einem Wendevorgang zu wenden;
- eine Fördereinheit (4), wobei die Fördereinheit (4) in der Rotationseinheit (3) aufgenommen ist und mittels der Rotationseinheit (3) bezüglich der Rotationsachse (R) rotierbar ist, und wobei die Fördereinheit (4) zumindest ein erstes Fördermittel (5) und zumindest ein gegenüberliegend angeordnetes zweites Fördermittel (6) umfasst, und
wobei mittels des ersten Fördermittels (5) eine erste Förderebene (7) definiert ist und mittels des zweiten Fördermittels (6) eine parallel zur ersten Förderebene (7) angeordnete zweite Förderebene (8) definiert ist, und
wobei die Fördereinheit (4) dazu ausgebildet ist, das Bauteil (2) zwischen der ersten und zweiten Förderebene (7,8) aufzunehmen, sodass das Bauteil (2) zwischen dem ersten und zweiten Fördermittel (5,6) für den Wendevorgang aufgenommen ist; wobei zumindest eines der beiden Fördermittel, umfassend das erste und zweite Fördermittel (5,6), bezüglich seiner Förderebene (7,8) entlang einer Förderrichtung (F) verfahrbar ausgebildet ist, und
die Fördereinheit (4) eine Anschlaganordnung (14) zur Anlage des Bauteils (2) im Wendevorgang umfasst, wobei die Anschlaganordnung (14) parallel bezüglich der ersten Förderebene (5) und senkrecht zur Rotationsachse (R) verstellbar ist,
**dadurch gekennzeichnet, dass** die Anschlaganordnung (14) über eine Gesamtlänge (25) der Fördereinheit angeordnet ist und bezüglich der Förderrichtung (F) in einem vorderen Endbereich (21) und hinteren Endbereich (22) der Fördereinheit (4) gelagert ist, sodass die Anschlagordnung (14) unabhängig von den Bewegungen der Fördermittel verstellbar ist.

2. Vorrichtung (1) nach Anspruch 1, **dadurch gekennzeichnet, dass** die Fördereinheit (4) zumindest eine Umlenkanordnung (9) aufweist, wobei mittels der Umlenkanordnung (9) das zumindest eine verfahrbare Fördermittel derart umlenkbar ist, dass es in einem Umlenkbereich (10) vom jeweils anderen, gegenüberliegenden Fördermittel distanzierbar ist.

3. Vorrichtung (1) nach Anspruch 1 oder 2, **dadurch gekennzeichnet, dass** die Förderrichtung (F) parallel zur Rotationsachse (R) ist.

4. Vorrichtung (1) nach einem der Ansprüche 1 bis 3, **dadurch gekennzeichnet, dass** das zumindest eine verfahrbare Fördermittel bürstenartige Elemente (11) aufweist, wobei die bürstenartigen Elemente zur Aufnahme des Bauteils (2) vorgesehen sind.

5. Vorrichtung nach Anspruch 4, **dadurch gekennzeichnet, dass** sich die bürstenartigen Elemente (11) senkrecht von dem verfahrbaren Fördermittel in Richtung des aufzunehmenden Bauteils erstrecken.

6. Vorrichtung nach Anspruch 4 oder 5, **dadurch gekennzeichnet, dass** ein Abstand (35) der bürstenartigen Elemente (11) zur Förderebene des gegenüberliegenden Fördermittel derart gewählt ist, dass der Abstand (35) geringer ist als eine Dicke (36) eines aufzunehmenden Bauteils (2).

7. Vorrichtung (1) nach einem der Ansprüche 1 bis 6, **dadurch gekennzeichnet, dass** das zumindest eine verfahrbare Fördermittel mittels eines Zugmitteltriebes (15), insbesondere eines umlaufenden Riemens, verfahrbar ist.

8. Vorrichtung (1) nach einem der Ansprüche 1 bis 7, **dadurch gekennzeichnet, dass** das zumindest eine verfahrbare Fördermittel einzelne stabförmige Förderelemente (16) umfasst; wobei die stabförmigen Förderelemente (16) quer zur Förderrichtung (F) angeordnet sind.

9. Vorrichtung nach Anspruch 8, **dadurch gekennzeichnet, dass** die stabförmigen Förderelemente (16) bezüglich einer Länge (40) des Zugmitteltriebes (15) nur innerhalb eines Zugmittelabschnittes (39) angeordnet sind, wobei der Zugmittelabschnitt (39) 30% bis 60 % der Länge (40) beträgt.

10. Vorrichtung (1) nach Anspruch 8 oder 9, **dadurch gekennzeichnet, dass** die stabförmigen Förderelemente (16) einen polygonalen Querschnitt aufweisen.

11. Vorrichtung (1) nach einem der Ansprüche 1 bis 10, **dadurch gekennzeichnet, dass** das erste und zweite Fördermittel (5,6) synchron zueinander verfahrbar sind.

12. Vorrichtung (1) nach einem der Ansprüche 1 bis 11, **dadurch gekennzeichnet, dass** die Fördereinheit (4) zwischen dem ersten und zweiten Fördermittel (5,6) eine seitliche Zugangsöffnung (28) aufweist, wobei mittels der Zugangsöffnung (28) ein Zuführen eines plattenförmigen Bauteils (2) zwischen der ersten und zweiten Förderebene (7,8) quer zur Förderrichtung (F) ermöglicht ist.

13. Vorrichtung (1) nach einem der Ansprüche 1 bis 12, **dadurch gekennzeichnet, dass** die Rotationseinheit (3) zumindest zwei konzentrisch zur Rotationsachse (R) angeordnete ringförmige Elemente (12) umfasst, wobei die Fördereinheit (4) zwischen den zwei ringförmigen Elementen (12) aufgenommen ist.

14. Vorrichtung (1) nach Anspruch 13, **dadurch gekennzeichnet, dass** die ringförmigen Elemente (12) starr mit der Fördereinheit (4) verbunden und rotierbar sind, wobei die ringförmigen Elemente (12) drehbar in einer Lageranordnung (13) aufgenommen sind.

## Claims

1. A device (1) for turning plate-shaped components (2), in particular metal sheets, comprising
- a rotation unit (3), wherein the rotation unit (3) is configured to turn the component (2) with respect to a rotational axis (R) in a turning process;
- a conveyor unit (4), wherein the conveyor unit (4) is accommodated in the rotation unit (3) and can be rotated with respect to the rotational axis (R) by means of the rotation unit (3), and wherein the conveyor unit (4) comprises at least one first conveying means (5) and at least one oppositely arranged second conveying means (6), and
wherein a first conveying plane (7) is defined by means of the first conveying means (5) and a second conveying plane (8) arranged parallel to the first conveying plane (7) is defined by means of the second conveying means (6), and
wherein the conveyor unit (4) is configured to receive the component (2) between the first and second conveying planes (7, 8), so that the component (2) is received between the first and second conveying means (5, 6) for the turning process; wherein at least one of the two conveying means, comprising the first and second conveying means (5, 6), is configured to be transferable relative to its conveying plane (7, 8) along a conveying direction (F), and
the conveyor unit (4) comprises a stop arrangement (14) for supporting the component (2) in the turning process, wherein the stop arrangement (14) is adjustable in parallel to the first conveying plane (5) and perpendicular to the rotational axis (R), **characterized in that** the stop arrangement (14) is arranged over a total length (25) of the conveyor unit and is mounted in a front end region (21) and rear end region (22) of the conveyor unit (4) with respect to the conveying direction (F) such that the stop arrangement (14) is adjustable independently of the movements of the conveying means.

2. The device (1) according to claim 1, **characterized in that** the conveyor unit (4) has at least one deflection arrangement (9), wherein the at least one transferable conveying means is deflectable by means of the deflection arrangement (9) in such a way that it can be distanced from the respective other, opposite conveying means in a deflection region (10).

3. The device (1) according to claim 1 or 2, **characterized in that** the conveying direction (F) is parallel to the rotational axis (R).

4. The device (1) according to one of claims 1 to 3, **characterized in that** the at least one transferable conveying means has brush-like elements (11), wherein the brush-like elements are provided for receiving the component (2).

5. The device according to claim 4, **characterized in that** the brush-like elements (11) extend perpendicularly from the transferable conveying means in the direction of the component to be received.

6. The device according to claim 4 or 5, **characterized in that** a distance (35) of the brush-like elements (11) to the conveying plane of the opposite conveying means is selected such that the distance (35) is smaller than a thickness (36) of the component (2) to be received.

7. The device (1) according to one of claims 1 to 6, **characterized in that** the at least one transferable conveying means is transferable by means of a traction drive (15), in particular a circulating belt.

8. The device (1) according to one of claims 1 to 7, **characterized in that** the at least one transferable conveying means comprises individual rod-shaped conveying elements (16), wherein the rod-shaped conveying elements (16) are arranged transversely to the conveying direction (F).

9. The device according to claim 8, **characterized in that** the rod-shaped conveying elements (16) are arranged only within a traction drive section (39) with respect to a length (40) of the traction drive (15), wherein the traction drive section (39) amounts to 30% to 60% of the length (40).

10. The device (1) according to claim 8 or 9, **characterized in that** the rod-shaped conveying elements (16) have a polygonal cross-section.

11. The device (1) according to one of claims 1 to 10, **characterized in that** the first and second conveying means (5, 6) are transferable synchronously to each other.

12. The device (1) according to one of claims 1 to 11, **characterized in that** the conveyor unit (4) has a lateral access opening (28) between the first and second conveying means (5, 6), wherein the access opening (28) allows for a plate-shaped component (2) to be fed between the first and second conveying planes (7, 8) transversely to the conveying direction (F).

13. The device (1) according to one of claims 1 to 12, **characterized in that** the rotation unit (3) comprises at least two annular elements (12) arranged concentrically with respect to the rotational axis (R), wherein the conveyor unit (4) is accommodated between the two annular elements (12).

14. The device (1) according to claim 13, **characterized in that** the annular elements (12) are rigidly connected to the conveyor unit (4) and are rotatable, wherein the annular elements (12) are rotatably accommodated in a bearing arrangement (13).

## Revendications

1. Dispositif (1) permettant de retourner des composants (2) en forme de plaque, en particulier des tôles, comprenant :
- une unité de rotation (3), dans lequel l'unité de rotation (3) est conçue pour retourner le composant (2) par rapport à un axe de rotation (R) lors d'une opération de retournement ;
- une unité de transport (4), dans lequel l'unité de transport (4) est accueillie dans l'unité de rotation (3) et peut être mise en rotation par rapport à l'axe de rotation (R) au moyen de l'unité de rotation (3), et dans lequel l'unité de transport (4) comprend au moins un premier moyen de transport (5) et au moins un second moyen de transport (6) agencé à l'opposé, et
dans lequel un premier plan de transport (7) est défini au moyen du premier moyen de transport (5) et un second plan de transport (8) agencé de manière parallèle au premier plan de transport (7) est défini au moyen du second moyen de transport (6), et
dans lequel l'unité de transport (4) est conçue pour accueillir le composant (2) entre les premier et second plans de transport (7, 8), de sorte que le composant (2) est accueilli entre les premier et second moyens de transport (5, 6) en vue de l'opération de retournement ; dans lequel au moins un des deux moyens de transport, comprenant les premier et second moyens de transport (5, 6), est réalisé de manière à pouvoir être déplacé par rapport à son plan de transport (7, 8) le long d'une direction de transport (F), et
l'unité de transport (4) comprend un agencement de butée (14) permettant l'appui du composant (2) lors de l'opération de retournement, dans lequel l'agencement de butée (14) peut être réglé parallèlement au premier plan de transport (5) et perpendiculairement à l'axe de rotation (R),
**caractérisé en ce que** l'agencement de butée (14) est agencé sur une longueur totale (25) de l'unité de transport et est mis sur palier dans une région d'extrémité avant (21) et une région d'extrémité arrière (22) de l'unité de transport (4) par rapport à la direction de transport (F), de sorte que l'agencement de butée (14) peut être réglé indépendamment des mouvements du moyen de transport.

2. Dispositif (1) selon la revendication 1, **caractérisé en ce que** l'unité de transport (4) présente au moins un agencement de déviation (9), dans lequel le au moins un moyen de transport déplaçable peut être dévié au moyen de l'agencement de déviation (9) de manière à pouvoir être éloigné de l'autre moyen de transport opposé respectif dans une région de déviation (10).

3. Dispositif (1) selon la revendication 1 ou 2, **caractérisé en ce que** la direction de transport (F) est parallèle à l'axe de rotation (R).

4. Dispositif (1) selon l'une quelconque des revendications 1 à 3, **caractérisé en ce que** le moyen de transport déplaçable présente des éléments en forme de brosse (11), dans lequel les éléments en forme de brosse sont prévus pour accueillir le composant (2).

5. Dispositif selon la revendication 4, **caractérisé en ce que** les éléments en forme de brosse (11) s'étendent en direction de la pièce à accueillir, perpendiculairement au moyen de transport déplaçable.

6. Dispositif selon la revendication 4 ou 5, **caractérisé en ce qu'**une distance (35) entre les éléments en forme de brosse (11) et le plan de transport du moyen de transport opposé est choisie de manière à ce que la distance (35) soit inférieure à une épaisseur (36) d'un composant (2) à accueillir.

7. Dispositif (1) selon l'une quelconque des revendications 1 à 6, **caractérisé en ce que** le au moins un moyen de transport déplaçable peut être déplacé au moyen d'un mécanisme de traction (15), en particulier au moyen d'une courroie périphérique.

8. Dispositif (1) selon l'une quelconque des revendications 1 à 7, **caractérisé en ce que** le au moins un moyen de transport déplaçable (5, 6) comprend des éléments de transport (16) individuels en forme de barre ; dans lequel les éléments de transport (16) en forme de barre sont agencés transversalement par rapport à la direction de transport (F).

9. Dispositif selon la revendication 8, **caractérisé en ce que** les éléments de transport (16) en forme de barre sont agencés uniquement à l'intérieur d'une section de traction (39) par rapport à la longueur (40) du mécanisme de traction (15), dans lequel la section de traction (39) représente entre 30 % et 60 % de ladite longueur (40).

10. Dispositif (1) selon la revendication 8 ou 9, **caractérisé en ce que** les éléments de transport (16) en forme de barre présentent une section transversale polygonale.

11. Dispositif (1) selon l'une quelconque des revendications 1 à 10, **caractérisé en ce que** les premier et second moyens de transport (5, 6) peuvent être déplacés de manière synchrone l'un par rapport à l'autre.

12. Dispositif (1) selon l'une quelconque des revendications 1 à 11, **caractérisé en ce que** l'unité de transport (4) présente un orifice d'accès latéral (28) entre les premier et second moyens de transport (5, 6), dans lequel l'orifice d'accès (28) permet un acheminement d'un composant (2) en forme de plaque entre les premier et second plans de transport (7, 8) transversalement par rapport à la direction de transport (F).

13. Dispositif (1) selon l'une quelconque des revendications 1 à 12, **caractérisé en ce que** l'unité de rotation (3) comprend au moins deux éléments annulaires (12) agencés de manière concentrique par rapport à l'axe de rotation (R), dans lequel l'unité de transport (4) est accueillie entre les deux éléments annulaires (12).

14. Dispositif (1) selon la revendication 13, **caractérisé en ce que** les éléments annulaires (12) sont reliés de manière rigide à l'unité de transport (4) et peuvent tourner avec celle-ci, dans lequel les éléments annulaires (12) sont accueillis de manière rotative dans un agencement de palier (13).
